Europäisches Patentamt

European Patent Office

Office européen des brevets

(11) Publication number: **0 455 912 A2**

# EUROPEAN PATENT APPLICATION

(21) Application number: 90313660.4

(51) Int. Cl.5: **H04M 3/50**

(22) Date of filing: **14.12.90**

(30) Priority: **11.05.90 US 521964**

(43) Date of publication of application:
**13.11.91 Bulletin 91/46**

(84) Designated Contracting States:
**DE FR GB IT**

(71) Applicant: **AMERICAN TELEPHONE AND TELEGRAPH COMPANY**
**550 Madison Avenue**
**New York, NY 10022(US)**

(72) Inventor: **Fink, Laurence I.**
**20 Algonquin Road**
**Holmdel, New Jersey 07733(US)**
Inventor: **Lothrop, John R.**
**3813 Columbia Drive**
**Longmont, Colorado 80503(US)**
Inventor: **Overmyer, Ricky L.**
**29304 Spruce Canyon Drive**
**Golden, Colorado 80403(US)**

(74) Representative: **Buckley, Christopher Simon Thirsk et al**
**AT&T (UK) LTD. 5 Mornington Road**
**Woodford Green, Essex IG8 OTU(GB)**

(54) Electronic messaging system with multiple personal greetings.

(57) An electronic messaging system allows a system subscriber to record a plurality of "customized" personal greetings which are played in response to incoming calls to the messaging system. Each of these greetings is placed in a message "pool" and a message system subscriber can specify the greeting that is to be played for each of a variety of call types. Each call type serves to differentiate between incoming communications based on one or more predetermined characteristics. Such call types, for example, may differentiate between incoming communications which are answered due to the called party not answering, or the called party being busy, or the call is received after normal working hours, or the call is an internal call, i.e., one that has originated on a local PBX or network of interconnected PBXs as compared to an "external" call which is of different origin. In addition, in a communications environment where an identification of the calling party is available, e.g., the telephone number of the communications device used by the calling party, each of a predetermined number of call types may be associated with one or more calling party identifications.

## TechnicalField

The present invention relates to electronic messaging systems which communicate a stored greeting upon receiving a call for a system subscriber and, more particularly, to such a system which can provide multiple personal greetings for a given system subscriber.

## Backgroundof the Invention

Electronic messaging systems are systems wherein messages between two or more parties may be communicated and stored for later retrieval by the message recipient. The form of the communicated messages may be voice or data, the latter being virtually limitless and including facsimile, video, and text. A typical scenario in such systems is that a call to the system subscriber is answered by the system which transmits a prestored greeting or announcement message to the calling party. The calling party then has the opportunity to leave a message for the system subscriber. The greeting or announcement message may be "personal", i.e., it is created by the system subscriber and, in voice messaging systems, is oftentimes recorded and played back in the subscriber's own voice.

Electronic messaging systems, which include answering machines, provide numerous advantages. One significant advantage is that it is not required that the message sender and the message receiver be simultaneously present at the time the message is communicated. Problems, however, do arise. One such problem arises when a called party does not provide an adequate announcement message. For example, the most prevalent message left in voice messaging systems, e.g., answering machines, is not "customized" and is the same for any calling party. One example of this is the commonly used message wherein the called party states that he or she is presently unavailable and will return any calls if the caller's name and telephone number are left. This often results in a significant amount of "telephone tag" wherein each caller repeatedly misses reaching the other and leaves his or her name and telephone number in the voice messaging system. In addition, the calling party may not leave a message for the called party due to the announcement message's inadequacies, such as not being specific enough or sufficiently reassuring to the calling party that the called party will indeed return the call if a message is left by the calling party.

One solution to the above-referenced problem is to provide a different announcement message for different types of calls. A major shortcoming of this solution is that the message provided for a particular call type frequently has to be changed and such a change requires recording a new announcement for that particular call type over the previous announcement. If this previous announcement is later desired, it must be recorded again. As surveys of customers of messaging systems have revealed a dislike of frequently rerecording announcement messages or personal greetings, it would be desirable if an approach could be devised which would provide for multiple personal greetings in a manner which reduces the need for a system subscriber to rerecord announcements when a change is desired and which eliminates the above-referenced inadequacies of announcement messages in the prior art.

## Summaryof the Invention

The present invention relates to an electronic messaging system which allows a system subscriber to record a plurality of personal greetings which may be played in response to incoming calls to the messaging system. Each of these greetings is placed in a message "pool" and a messaging system subscriber can specify the greeting that is to be automatically played back for each of a variety of call types. Each of these call types is defined by one or more possible characteristics of the incoming communications and, in the present invention, serves to differentiate therebetween. Such characteristics, by way of example, include origin, time, reason for call being redirected to messaging system, etc. As a result, the personal greetings may be "customized" for a particular call type. In the disclosed embodiment of the invention, such call types differentiate between calls handled by the messaging system because the called party does not answer as compared to the called party being busy on another call. Incoming communications may also be differentiated based on the time of receipt, e.g., calls to a business received after normal working hours as compared to calls received during normal working hours. Finally, incoming communications may be distinguished based on the origin of each communication, e.g., an internal call, i.e., one that has originated on a local PBX or a network of interconnected PBXs as compared to an "external" call which is of a different origin. Moreover, in certain communications environments, wherein an identification of a calling party is available to the electronic messaging system, each of a predetermined number of call types may be associated with one or more calling party identifications. Use of one or more calling party identifications permits a personalized greeting to be selected by the system subscriber and thereafter played back in response to incoming communications associated with the specified calling party identification(s).

## BriefDescription of the Drawing

FIG. 1 is a block diagram which illustrates the principles of the present invention;

FIG. 2 is a block diagram of a communications system 200 embodying the principles of the present invention;

FIG. 3 is a block-schematic diagram of a PBX used in the system of FIG. 2;

FIG. 4 is a block-schematic diagram of the voice messaging system of FIG. 2;

FIG. 5 is a representation of the data arrangement maintained by digital storage system in the voice messaging system of FIG. 4;

FIG. 6 is a flowchart of the sequence of operations performed by the voice messaging system of FIG. 4 in playing a personal greeting in response to an incoming call;

FIG. 7 is a flowchart of the sequence of operations performed by the voice messaging system of FIG. 4 when a system subscriber desires to activate his or her personal greetings; and

FIG. 8 is a flowchart of the sequence of operations performed by the voice messaging system of FIG. 4 when a system subscriber desires to record personal greetings.

## DetailedDescription

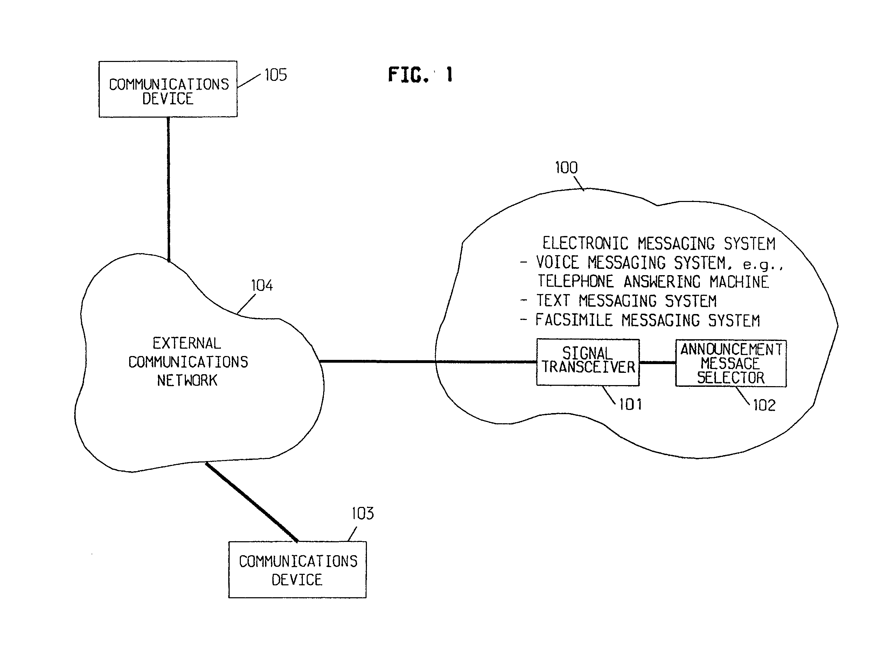

As shown in FIG. 1, electronic messaging system 100, including a signal transceiver (transmitter/receiver) portion 101 and announcement message selector portion 102, provides electronic messaging services for at least one communications device 103. Such messaging services include voice messaging, text messaging and facsimile messaging. Device 103, which can be any of a variety of types, such as telephone station sets, personal computers, data terminals, facsimile machines, etc., is connected to electronic messaging system 100 via external communications network 104 in well-known fashion. In a typical situation, incoming communications for device 103 can be redirected to electronic messaging system 100 which, in response thereto, provides an announcement message and the capability of storing a reply message, the latter using message storing apparatus which is not shown. The incoming communications for one communications device 103 can originate from either another communications device similar to device 103 (not shown) which is also provided with messaging services by electronic messaging system 100 or from at least one communications device 105 which can encompass the same variety of equipment types as device 103 but which is not provided with messaging services by electronic messaging system 100. As will be discussed, hereinbelow, pursuant to the present invention, electronic messaging system 100 is provided with the capability of providing announcement messages which are a function of both an identification of the called communications device as well as an identification of the call type and the reason for the call being routed to the electronic messaging system. All of these identifiers are automatically provided to signal transceiver 101 by external communications network 104. The received identifiers and, preferably, the time and date are then coupled to message selector 102 which selects the appropriate announcement message in response to all of the coupled information.

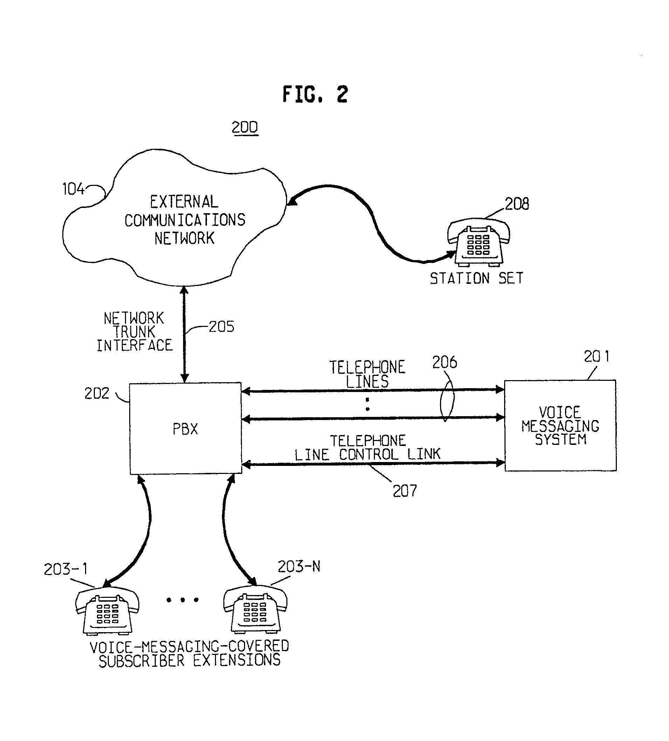

Refer now to FIG. 2. Voice messaging system 201 is integrated with a private branch exchange switch (PBX) 202 to provide answering machine and voice messaging services for any of a plurality of subscriber station sets 203-1 through 203-N connected to the PBX. PBX 202 interconnects these station sets along with a myriad of other communications devices (not shown), such as personal computers, video terminals, environmental sensing devices, such as smoke and fire detectors, facsimile machines, etc., to external communications network 104. Network 104 may be a public network, private network, or both, and may include other PBXs so as to provide a network of interconnected PBXs. Interconnection between the PBX and the external communications network is provided via network trunk interface 205 and interconnection to the voice messaging system is provided via one or more telephone lines 206 and telephone line control link 207. Each of lines 206 routes an individual call to the voice messaging system while link 207 conveys ancillary information about the call to the voice messaging system. At this juncture, it should be noted that while the illustrative voice messaging system is interconnected to a PBX, the present invention is applicable for use with any telephone switching equipment including central office switches.

When a call is made from a station set 208, which is external to PBX 202, to a voice-messaging-covered one of station sets 203-1 through 203-N, the call comes into the PBX via a network trunk interface 205 and is routed through the PBX by call processing software therein to the designated station set where ringing occurs. If the call is not answered within a predetermined number of rings or if the extension is busy, the call processing software within the PBX redirects the call to voice messaging system 201 via an available one of telephone lines 206. In conjunction with this redirection, a control message is sent through the telephone line control link 207 to the voice messaging system. This control message includes the extension number of the station set for which the call was intended, the reason for the redirection, i.e., busy, no answer, out-of-service, etc., and, in certain applications, the telephone number of station set 208 which is commonly referred to as the calling party identification. One such application where the calling party identification is available is in an Integrated Services Digital Network (ISDN). In ISDN, the calling party identification is the telephone number of the communication instrumentality used to originate the incoming communication and is supplied, in well-known fashion, in a time-division-multiplexed channel in network trunk interface 205.

The calling party identification may also identify the calling party by using other information. For example, in applications where the calling party is a subscriber to a voice messaging system or to a PBX, the calling party identification may be the PBX extension of the communication device utilized by the calling party to originate the incoming communication. Alternatively, in certain communications systems, a database is maintained which associates an alphanumeric text identifier for each of a predetermined set of communications devices. An example of one such system is a PBX wherein the translation memory associates an alphanumeric text identifier for each communications device directly connected to the "line" side of the PBX. In any event, in such systems the alphanumeric text identifier can include a person's name or several such names or a group identification, such as "Laboratory 123" or "Sales Department". Since the telephone number or PBX extension or alphanumeric text identifier can be readily forwarded to the voice messaging system, the term "calling party identification" shall hereinafter encompass any information that a communications system associates with the communications device utilized to originate the incoming communications.

In lieu of the telephone number of station set 208, or, in applications where the calling party identification is not available, the control message may indicate whether the calling party is "external" to the PBX, i.e., the call is arriving on an incoming trunk, or "internal" to a PBX or network of PBXs, i.e., the call originated on a station set directly connected to the PBX(s). In any event, the voice messaging system uses the control information and, if desired, the time of the incoming call to find a corresponding announcement message which has been pre-recorded and stored within the voice messaging system. This corresponding announcement message will then be used to answer the call. After playing the announcement message, a beep tone is played to indicate that the voice messaging system is recording any message from the calling party. When the calling party hangs up, the recorded message from that party is stored in the voice messaging system and is retrievable at a later time by the called party. The voice messaging system also sends message-waiting information back to the PBX which is typically used to illuminate the message waiting lamp on the called party's station set. As a result, the called party knows that there is a message to be retrieved.

It should, of course, be understood that while the present invention has been described in relation to a call originating from a station set external to PBX 202, the same scenario is applicable to calls originating from station sets directly connected to PBX 202 as well as station sets connected to other PBXs which are interconnected to PBX 202 via external communications network 104.

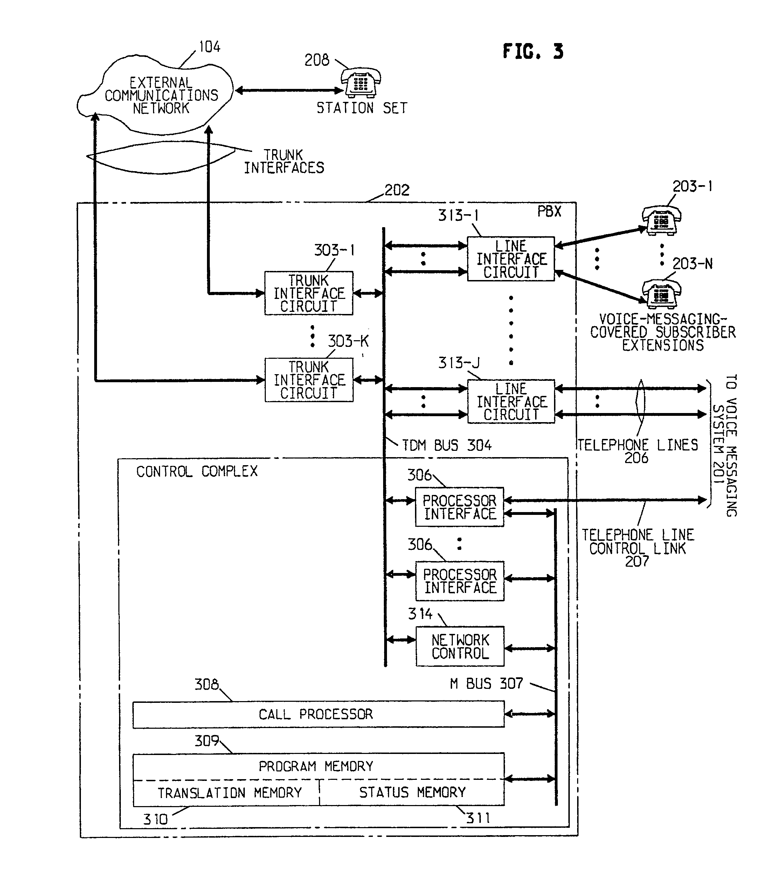

FIG. 3 shows an environment wherein PBX 202 is connected to external network 104 via one or more trunk interfaces. Each of these interfaces is connected to time-division multiplex (TDM) bus 304 via one of a plurality of trunk interface circuits 303-I through 303-K.

Control of the routing of each trunk channel in the PBX is provided by standardized signaling interfaces. When a call is placed from station set 208 to a called party number which is an extension on the PBX, e.g., station set 203-I, the ID of the called party is routed to the PBX from the external network 104 and is coupled through one of the trunk interfaces and associated trunk interface circuits 303-I through 303-K to TDM bus 304. In an ISDN environment and the like, trunk interface circuits 303-I through 303-K can also extract the calling party identification which is routed to such circuits by the external communications network 104. Bus 304 carries the call information to one of the processor interface circuits 306. Each circuit 306 contains specific logic to terminate the protocol and couples the call information via memory bus (M-bus) 307 to call processor 308. Program memory 309 stores the necessary instructions which are used by call processor 308. Memory 309 is subdivided into two sections--translation memory 310 which stores translation and redirection data and status memory 311 which stores the current status of all of the PBX's lines, trunks and associated equipment.

Assuming that the requested communication in the call setup can be fulfilled, setup of the call proceeds via control messages which are coupled between network control 314 and line interface circuit 313-I. Voice communications between the calling party and called party are established once the called party goes off-hook. If, however, the called party's phone is busy or unanswered for a certain time period, the call processor routes the call to voice messaging system 201. This routing is accomplished by connecting the incoming trunk facility for the call to one of the one or more line interface circuits, designated as 313-I through 313-

J for which an available telephone line 206 exists. Such availability is determined by data stored in translation memory 310 and status memory 311. The call processor also couples the required information in the call setup, such as the calling party identification and called party digits and the reason for redirection, to the voice messaging system via one of the one or more processor interface units 306 which are directly connected to voice messaging system 201 via the telephone line control link 207.

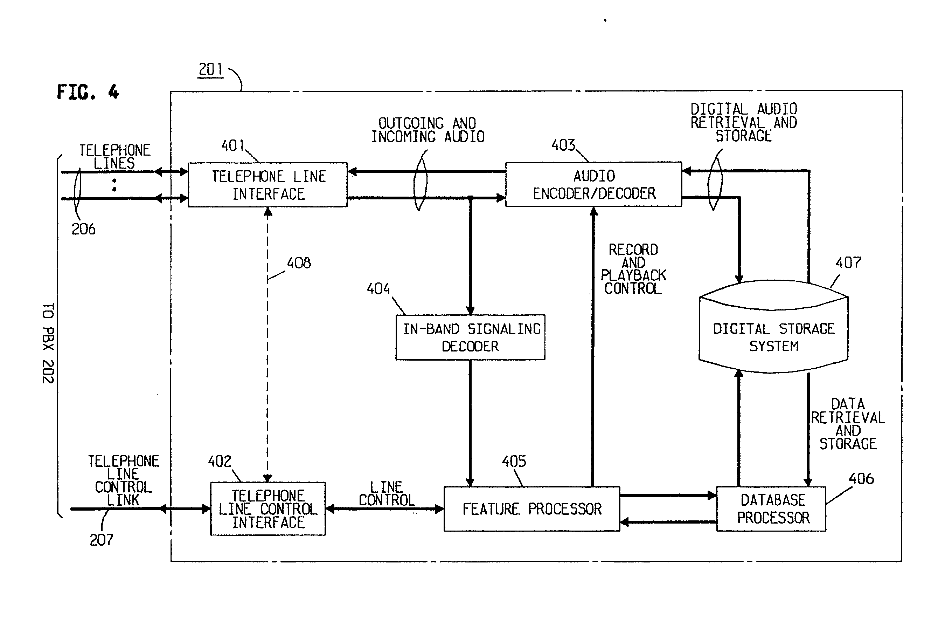

Refer now to FIG. 4. Voice messaging system 201 includes telephone line interface 401, telephone line control interface 402, audio encoder and decoder 403, in-band signaling decoder 404, feature processor 405, database processor 406 and digital data storage system 407. Each redirected call from PBX 202 via one of telephone lines 206 is coupled through telephone line interface 401. The format of the information on telephone lines 206 may be any of a number of well-known arrangements, such as tip-ring, TI, ISDN Basic Rate Interface (BRI) or Primary Rate Interface (PRI) or, for that matter, any proprietary format. Interface 401 provides the necessary signal translation for information signals, e.g., messages to be recorded or played back, system announcements and instructions to the calling party, etc., passing between the telephone lines and the voice messaging system. When any call control information originates from interface 401, it is coupled to telephone line control interface 402 via link 408. Interface 402 also provides the logical interface for out-of-band call control information received via link 407. In the simplest case, interface 402 differentiates between the various states of the telephone line such as on-hook, off-hook, addressing, talk, hang-up and ringing and can receive information on the call destination, and on whether or not the call has been previously redirected, and the reason for such redirection. Moreover, in accordance with the present invention, line control interface 402 can also receive information on the origin of the call, i.e., internal or external or the calling party identification. Interface 402 may be connected to one or more line control links 207 to receive such out-of-band call control information.

Audio encoder/decoder 403 couples incoming and outgoing audio information between telephone line interface 401 and digital storage system 407. During recording of a message, encoder/decoder 403 prepares the audio material for storage and couples the result to digital storage system 407. System 407 can be RAM, disk, tape based, or any other form of storage system. During message playback, encoder/decoder 403 retrieves information from storage system 407 and regenerates the originally recorded audio information which is then coupled through interface 401 to one of telephone lines 206. The recording and playback modes are under the direct control of feature processor 405. The various types of information stored in system 407 are uniquely identified by storage indices or keys. These keys are maintained along with associated program information by database processor 406.

Voice messaging system 201 also includes in-band signal decoder 404 which is coupled to the output of telephone line interface 401 to monitor this output for the presence of calling-party-generated signaling information. When such information is detected, it is decoded and passed to the feature processes stored in feature processor 405 in the form of control tokens. These tokens may represent control commands such as begin recording, end recording, etc., or they may represent data such as a telephone number or an identification number.

Feature processor 405 utilizes one or more processes, under stored program control, to implement the service features of the voice messaging system. Similarly, database processor 406 employs one or more processes, under stored program control, to manage the storage and retrieval of data for feature processor 405. The data managed is that stored in data storage system 407 and includes subscriber data, system data, traffic and maintenance information, and voice data for announcements and messages. The database processes work together to insert, sort, delete, queue and return information to the feature processes which, in turn, implement a specified feature. For example, when a user calls directly into the system to retrieve his or her messages, the database processes return to the feature processes an ordered list of message headers which contain information about each of the messages to be played out, such as message originator, message creation time, type of call, etc., along with the storage keys for the messages themselves.

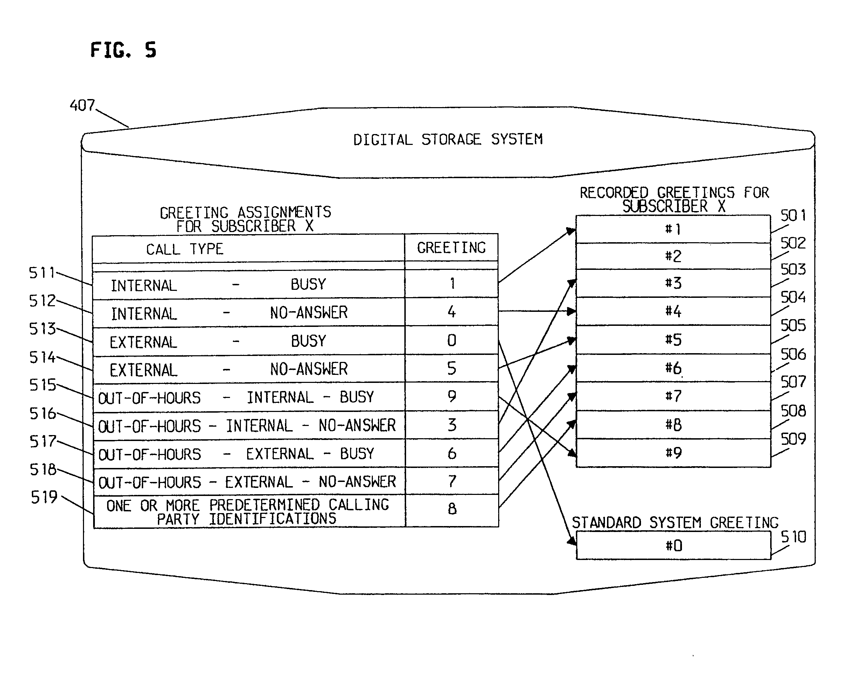

The arrangement of the data stored in digital storage system 407 is shown in FIG. 5. Pursuant to the present invention, storage system 407 maintains two databases. In the first database, provision is made for the storage of a plurality of greetings for each system subscriber to voice messaging system 201. FIG. 5 shows ten such greetings, designated by 501 through 510, available for use by an arbitrary subscriber "X". The number of greetings shown in FIG. 5 is, of course, merely exemplary. Greetings 501 through 509 are recorded by subscriber "X" and, accordingly, the content of the greeting is solely determined by the recording subscriber. Because of a plurality of these greetings can be created and recorded by the individual subscriber to pertain to different personal situations, such personal greetings", which term is accordingly used in the title of this invention. Greeting 510, on the other hand, is designated as the standard system greeting and is a "canned" message that is automatically provided by the system for each system subscriber. The content of this greeting is the same for each system subscriber except for the insertion of the system subscriber's name into a predetermined place within the message. This insertion is automatically provided by the system.

The use of a standard system greeting in the present invention advantageously provides a default greeting for each incoming call handled by the voice messaging system. Therefore, the present invention is compatible for use by those system subscribers who do not wish to utilize the capabilities of a customized personal greeting or by system subscribers who wish to provide a customized greeting for only a portion of the call types recognized by a messaging system in accordance with the present invention. In addition, the use of a standard system greeting automatically provides a greeting upon subscription to the system and thereby assures that a greeting will be played back in response to every incoming call.

The second database stores any assignment of a stored greeting, including the system greeting, to one of a plurality of predetermined call types. Each assignment assigns a stored greeting to an associated call type for a particular system subscriber. The result of each assignment is that the system will play back the greeting assigned by a particular system subscriber in response to an incoming call of the associated call type to that system subscriber.

A variety of such call types may be differentiated by a system incorporating the principles of the present invention. Each call type serves to differentiate between calls based on one or more predefined characteristics of the incoming communications. In the illustrative embodiment, the call types differentiated by the system include internal calls, i.e., calls originating from a station set directly connected to PBX 202 or to a PBX in a network of interconnected PBXs that includes PBX 202, and external calls, i.e., calls originating from a station external to PBX 202 or to a network of interconnected PBXs that includes PBX 202. The system also differentiates between calls arriving when the called party or system subscriber is busy on another call and when the called party simply does not answer. Differentiation is also provided for out-of-hours calls which are calls arriving at a time outside of a predetermined time period. This time period is typically one which spans normal working hours. Finally, each of a predetermined number of call types may be designated for at least one calling party identification. The use of a calling party identification as a call type advantageously allows a customized greeting for a particular calling party. The dedication of a call type to a plurality of calling party identifications is useful when a particular greeting is to be played for any of a group of callers, e.g., family members, friends, specific co-workers, business clients, etc.

In any event, the foregoing characteristics used to differentiate between incoming communications may each be associated with a different call type or may be combined with one another. In the disclosed embodiment, as shown in FIG. 5, nine different call types designated as 511 through 519 are utilized. For example, call type 511 is an internal call which arrives within the predetermined time period, e.g., normal working hours, when the system subscriber is busy on another call whereas call type 512 is an internal call which arrives during the same time period when the system subscriber does not pick up his phone after a predetermined number of rings and, therefore, is presumed to be away from his phone. Similarly, call type 513 designates an external call which arrives within the predetermined time period when the subscriber is busy on another call, and call type 514 is for an external call which arrives during this time period when a system subscriber does not pick up his phone after a predetermined number of rings and, therefore, is presumed to be away from his phone. All calls arriving outside of the predetermined time period, e.g., "out-of-hours" calls, are divided into four call types depending on the status of the system subscriber, i.e., busy or no answer, and on the origination point of an incoming call, i.e., internal or external. These four call types are designated in FIG. 5 as 515 through 518. Finally, call type 519 is designated for calls having one or more calling party identifications.

The second database may associate one of the greetings 501 through 510 for each of the defined call types. In this regard, the association is unrestricted and is solely determined by the desire of the system subscriber associated with the stored greetings. Therefore, any one stored greeting, including the standard system greeting, may be associated with any call type. Accordingly, as shown in FIG. 5 for the illustrative subscriber "X", stored greeting #1 is associated with call type 511, stored greeting #4 is associated with call type 512, greeting #0 is associated with call type 513, etc. It should be noted that a subscriber need not associate a greeting with each call type and that any stored greeting may be associated with more than one call type. Furthermore, the number and characteristics of the call types recognized by the system can vary and may be adjusted to suit a variety of needs. Therefore, it may be desirable, for example, that not all of the eight call types, 511-518, shown in FIG. 5 be utilized. It may be preferable, in order to reduce system complexity in some applications, that call types 511 and 512 be combined, and/or that call types 513 and 514 be combined and/or that call types 515 through 518 be combined. Of course, call types having completely different characteristics can be defined and, if desired, combined with one another.

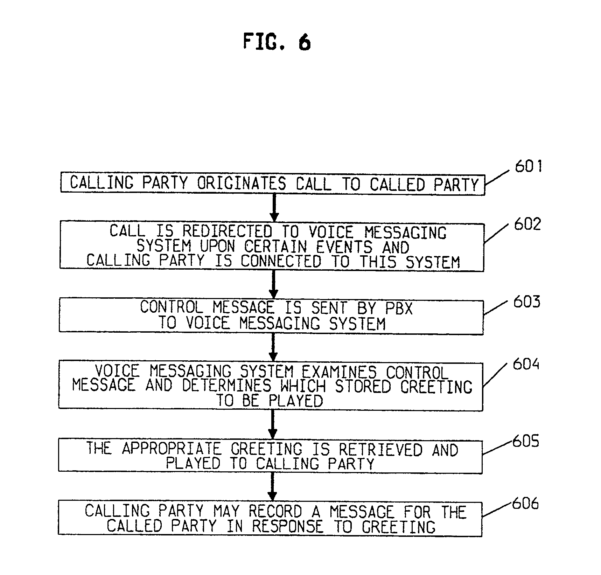

FIG. 6 shows the sequence of operations performed by the illustrative voice messaging system in order to provide a customized greeting in response to an incoming call to a system subscriber. This sequence begins, as shown by step 601, when a calling party originates a call to a called party who is also a voice messaging system subscriber. The calling party may or may not be a subscriber to voice messaging system 201. As indicated by step 602, this call is redirected to the voice messaging system upon any one of a number of predetermined criteria. Redirection involves PBX 202 connecting the calling party to one of telephone lines 206, shown in FIG. 2. The predetermined criteria to activate redirection of a call may vary with voice messaging system application but typically include the called party activating call forwarding or call coverage, or the called party not answering the call within a predetermined number of rings, or the called party's phone line being busy. Call forwarding or call coverage refer to widely used communications system features which permit a party to forward or redirect his or her calls to another specified number. Consequently, the called party may have redirected his phone calls directly to a central number for the voice messaging system, or may have redirected his calls to another number and such redirected calls are not answered within a predetermined number of rings, or the phone corresponding to the redirected number is busy. In any of the foregoing cases, the call may be eventually redirected to the voice messaging system.

Upon redirection, a control message, as indicated by step 603, is also sent by the PBX 202 to the voice messaging system. This control message is sent via telephone line control link 207 of FIG. 2 and contains information including an identification of which of telephone lines 206 is connecting the call to the voice messaging system and an identification of the called party. In addition, pursuant to the present invention, the control message also contains an identification of the calling party, if known, or otherwise an identification of which trunk interface 205 of FIG. 2 is carrying the incoming call, and always contains an identification of which one of the predetermined criteria caused the call to be redirected to the voice messaging system. An identification of the calling party is known in a variety of circumstances, such as when the calling party is calling from one of station sets directly connected to PBX 202 or, as discussed, when the PBX is part of an ISDN.

In step 604, the contents of the control message are examined. Specifically, from the control message, feature processor 405 of FIG. 4 determines which one of the call types, e.g., 511, or 512 ... or 519 of FIG. 5, corresponds to the redirected call and, from the greeting assignments for the called party stored in digital storage system 407 of FIG. 5, determines which one of the recorded greetings is to be played to the calling party. In step 605, the stored greeting determined in step 604 is played back to the calling party and that party, in step 606, is given the opportunity to record a message in response to the greeting. This message is available to the called party and can be heard upon the called party logging into the voice messaging system. In well-known fashion, the leaving of any message by the calling party triggers a message waiting lamp or other message waiting indicator, e.g., "stutter" dial tone or "outcalling", on the called party's station set or leaves a message waiting indication on some other communication terminal associated with the called party. This later case arises in integrated messaging systems wherein subscribers to such systems may designate one of a plurality of associated communications terminals, including both voice and data terminals, to indicate the arrival of messages in any of a number of different electronic messaging services--voice, data, facsimile, etc.

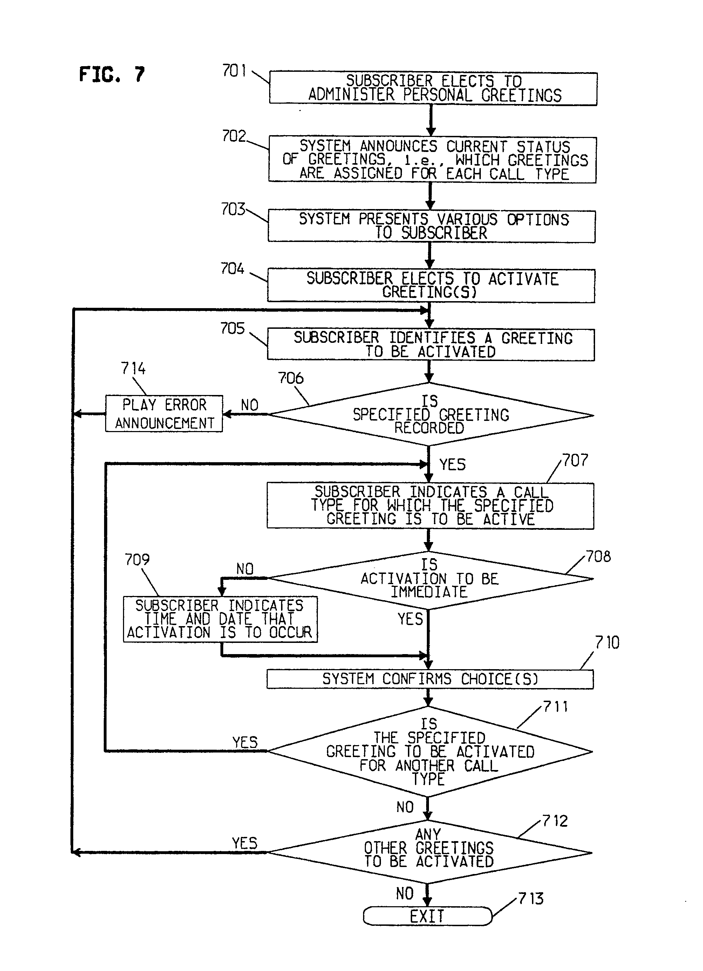

Refer now to FIG. 7 which shows the sequence of operations performed by voice messaging system 201 when a system subscriber wishes to activate one or more of the customized greetings pursuant to the present invention. This activation is begun when the subscriber logs into the system and elects to perform such greeting administration as indicated by step 701. In response to such an election, the voice messaging system, at step 702, provides the system subscriber with the current status of his greetings, i.e., which greetings are assigned to each call type. At step 703, the system then presents various options to the subscriber. Assuming the subscriber elects to activate his greetings at step 704, the subscriber will next identify at step 705 the number of the greeting to be activated. If there is no greeting associated with this greeting number at step 706, an error message at step 714 is played to the subscriber and the sequence of operations returns to step 705. If, however, there is a recorded greeting associated with this greeting number, the sequence proceeds to step 707 wherein the subscriber indicates a call type for which the identified greeting will be played. If a call type corresponds to at least one calling party identification, this identification is entered into the voice messaging system at step 707. Again, such identification can include a telephone number, PBX extension, or alphanumeric text information. To distinguish between these different types of identifications, a predetermined sequence of touch-tone generated information can be used. For example, *1, *2, and *3 can be entered prior to the calling party identification and can respectively distinguish between an entered telephone number, PBX extension, and alphanumeric text information.

If activation of this greeting is to be immediate, no further action need be taken and the sequence proceeds through step 708 to step 710. At step 710, the system confirms the subscriber's selection of greeting and call type via a playback to the subscriber. If activation of the identified greeting to the specified call type is not to be immediate, the subscriber at step 709 can specify the time and date of activation prior to step 710. If activation is in the future, the assignment is stored in a temporary buffer, not shown, and at the specified time and date is written into digital storage system 407. In addition, if the specified greeting is to be activated for another call type, the sequence at step 711 returns to step 707 and, if not, proceeds to step 712. At step 712, the sequence returns to step 705 if there are other greetings to be activated and associated with one or more call types. If not, the sequence terminates at step 713. It should be noted that the above sequence advantageously allows a previous assignment to be revised without the need to always rerecord the associated greeting.

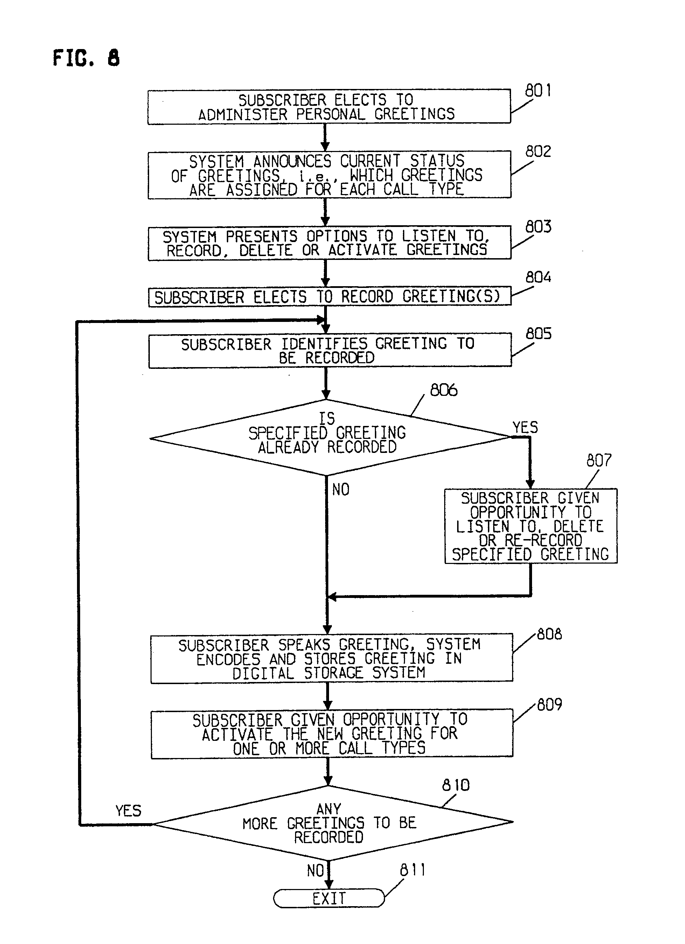

The sequence of operations associated with the recording of customized greetings is shown in FIG. 8. This sequence begins at step 801 with a subscriber electing to administer his personal greetings. The system at step 802 then informs the subscriber of the current status of his greetings, i.e., which greeting is assigned to each call type. At step 803, various options are presented to the subscriber, such as listening to, recording or activating his greetings. If an election is made to record greetings at step 804, the subscriber next identifies the greeting number of the greeting to be recorded at step 805. If there is a greeting already recorded for this number, an opportunity will be given the subscriber at step 807 to listen to, delete or rerecord the specified greeting. The desired greeting is recorded by the subscriber at step 808 after which it is encoded and stored within digital storage system 407. The stored greeting is then assigned to one or more call types at step 809 following the sequence already described in reference to FIG. 7. If there are not more greetings to be recorded at step 810, the subscriber exits the sequence or, if additional greetings are to be recorded, returns to step 805.

It should, of course, be understood that while the present invention has been described in reference to particular applications, other arrangements should be apparent to those of ordinary skill in the art. For example, while the detailed description primarily focuses on the present invention embodied within a voice messaging system in a PBX environment, the present invention is applicable to other voice messaging systems, such as answering machines, which are directly connected to a communications network. This implementation would merely require that telephone line 206 and telephone line control link 207 be integrated into a single communications interface such as that which exists in the ISDN BRI interface. In addition, the present invention is also applicable to other electronic messaging systems including electronic text and facsimile messaging systems. In an electronic text application, the station sets would be replaced by data terminals and the information communicated between the calling data terminal and the called data terminal would be analog or digital data (nonvoice) signals. In a facsimile messaging application, the station sets would be replaced by facsimile machines and the invention would automatically transmit prestored information via facsimile upon receiving an incoming facsimile message from a previously identified facsimile terminal which is associated with the prestored information. Finally, the present invention is also applicable to video messaging systems wherein digital representations of graphical information can be transmitted between parties and wherein it is contemplated that the announcement message played back can also include a digital representation of predefined graphical information.

## Claims

1. Apparatus for use in an electronic messaging system (201) which interfaces with a communications network, said system providing announcement messages for incoming communications from calling parties to at least one system subscriber, each of said incoming communications corresponding to one of a plurality of different call types (511-519), said apparatus

   CHARACTERIZED BY

   means (201, 707) for assigning any one of a plurality of stored announcement messages (501-509) to any one of said plurality of call types wherein each call type is defined by at least one predetermined characteristic of said incoming communications; and

   means (201, 604), responsive to an indication of the call type corresponding to each of said incoming communications, for retrieving the announcement message assigned to that call type.

2. The apparatus of claim 1 wherein said plurality of call types includes one call type for incoming communications arriving within a predetermined time period and another for calls arriving outside of said predetermined time period.

3. The apparatus of claim 1 wherein said plurality of call types includes one call type for incoming communications originating from a predetermined portion of said communications network and another for incoming communications originating outside of said predetermined portion.

4. The apparatus of claim 1 wherein at least one of said call types includes incoming communications having any one of a predetermined number of calling party identifications.

5. The apparatus of claim 1 wherein said assigning means is responsive to input signals from said subscriber.

6. The apparatus of claim 1 wherein certain ones of said call types have no announcement messages assigned thereto and said apparatus further includes means (201, 510) for providing a default announcement message in response to each incoming communication whose corresponding call type has no assigned announcement message.

7. The apparatus of claim 1 further including means (403) for converting said retrieved announcement message to a voice signal.

8. The apparatus of claim 1 wherein said electronic messaging system is a telephone answering machine.

9. The apparatus of claim 1 wherein said electronic messaging system is a facsimile messaging system.

10. The apparatus of claim 1 wherein said electronic messaging system is a text messaging system.

11. The apparatus of claim 1 wherein said electronic messaging system is a video messaging system.

12. The apparatus of claim 1 wherein said assignment of any announcement message to any call type by said assigning means is immediately utilized by said retrieving means.

13. The apparatus of claim 1 wherein said assignment of any announcement message to any call type by said assigning means is only utilized by said retrieving means at a future time.

14. The apparatus of claim 1 wherein said assigning means can alter a previous assignment of any one of said plurality of stored announcement messages to any one of said call types.

15. The apparatus of claim 1 further including means (407) for storing said stored announcement messages.

16. The apparatus of claim 1 further including means (403) for forming said stored announcement messages from received voice signals.

17. The apparatus of claim 16 wherein said received voice signals are supplied by said subscriber.

18. The apparatus of claim 1 wherein each of said incoming communications is first received by a communication device which is coupled to said network and is then redirected to said apparatus upon a predetermined condition.

19. The apparatus of claim 18 wherein one of said call types corresponds to said predetermined condition.

20. The apparatus of claim 18 wherein one of said plurality of call types indicates that said incoming communication was redirected because one said subscriber was using said communications device.

21. The apparatus of claim 18 wherein one of said plurality of call types indicates that said incoming communication was redirected because one said subscriber did not respond to signals from said communications device.

22. The apparatus of claim 1 wherein said electronic messaging system is a voice messaging system.

23. The apparatus of claim 22 wherein said voice messaging system is responsive to incoming communications to subscribers connected to a private branch exchange.

24. A method for use in an electronic messaging system which interfaces with a communications network, said system providing announcement messages for incoming communications from calling parties to at least one system subscriber, each of said incoming communications corresponding to one of a plurality of different call types, said method

CHARACTERIZED BY

the steps of

assigning any one of a plurality of stored announcement messages to any one of said plurality of call types wherein each call type is defined by at least one predetermined characteristic of said incoming communications; and

retrieving, in response to an indication of the call type corresponding to each of said incoming communications, any announcement message assigned to that call type.

FIG. 1

100 — ELECTRONIC MESSAGING SYSTEM
- VOICE MESSAGING SYSTEM, e.g., TELEPHONE ANSWERING MACHINE
- TEXT MESSAGING SYSTEM
- FACSIMILE MESSAGING SYSTEM

101 — SIGNAL TRANSCEIVER

102 — ANNOUNCEMENT MESSAGE SELECTOR

104 — EXTERNAL COMMUNICATIONS NETWORK

105 — COMMUNICATIONS DEVICE

103 — COMMUNICATIONS DEVICE

# FIG. 2

200

104 — EXTERNAL COMMUNICATIONS NETWORK

208 — STATION SET

NETWORK TRUNK INTERFACE — 205

202 — PBX

TELEPHONE LINES — 206

TELEPHONE LINE CONTROL LINK — 207

201 — VOICE MESSAGING SYSTEM

203-1 ... 203-N

VOICE-MESSAGING-COVERED SUBSCRIBER EXTENSIONS

# FIG. 3

External Communications Network 104; Station Set 208; Trunk Interfaces; PBX 202; Trunk Interface Circuit 303-1, 303-K; Line Interface Circuit 313-1, 313-J; Voice-messaging-covered subscriber extensions 203-1 ... 203-N; TDM Bus 304; Telephone Lines 206; Control Complex; Processor Interface 306; Network Control 314; M Bus 307; Telephone Line Control Link 207; To Voice Messaging System 201; Call Processor 308; Program Memory 309; Translation Memory 310; Status Memory 311

**FIG. 4**

TO PBX 202

TELEPHONE LINES — 206

TELEPHONE LINE CONTROL LINK — 207

201

401 TELEPHONE LINE INTERFACE

402 TELEPHONE LINE CONTROL INTERFACE

403 AUDIO ENCODER/DECODER

404 IN-BAND SIGNALING DECODER

405 FEATURE PROCESSOR

406 DATABASE PROCESSOR

407 DIGITAL STORAGE SYSTEM

408

OUTGOING AND INCOMING AUDIO

DIGITAL AUDIO RETRIEVAL AND STORAGE

RECORD AND PLAYBACK CONTROL

DATA RETRIEVAL AND STORAGE

LINE CONTROL

# FIG. 5

**DIGITAL STORAGE SYSTEM**

### GREETING ASSIGNMENTS FOR SUBSCRIBER X

| CALL TYPE | | | GREETING |
|---|---|---|---|
| INTERNAL | – | BUSY | 1 |
| INTERNAL | – | NO-ANSWER | 4 |
| EXTERNAL | – | BUSY | 0 |
| EXTERNAL | – | NO-ANSWER | 5 |
| OUT-OF-HOURS | – INTERNAL | – BUSY | 9 |
| OUT-OF-HOURS – INTERNAL | – NO-ANSWER | | 3 |
| OUT-OF-HOURS | – EXTERNAL | – BUSY | 6 |
| OUT-OF-HOURS – EXTERNAL | – NO-ANSWER | | 7 |
| ONE OR MORE PREDETERMINED CALLING PARTY IDENTIFICATIONS | | | 8 |

511, 512, 513, 514, 515, 516, 517, 518, 519

### RECORDED GREETINGS FOR SUBSCRIBER X

| |
|---|
| #1 |
| #2 |
| #3 |
| #4 |
| #5 |
| #6 |
| #7 |
| #8 |
| #9 |

501, 502, 503, 504, 505, 506, 507, 508, 509

### STANDARD SYSTEM GREETING

| |
|---|
| #0 |

510

EP 0 455 912 A2

# FIG. 6

CALLING PARTY ORIGINATES CALL TO CALLED PARTY — 601

↓

CALL IS REDIRECTED TO VOICE MESSAGING
SYSTEM UPON CERTAIN EVENTS AND
CALLING PARTY IS CONNECTED TO THIS SYSTEM — 602

↓

CONTROL MESSAGE IS SENT BY PBX
TO VOICE MESSAGING SYSTEM — 603

↓

VOICE MESSAGING SYSTEM EXAMINES CONTROL
MESSAGE AND DETERMINES WHICH STORED GREETING
TO BE PLAYED — 604

↓

THE APPROPRIATE GREETING IS RETRIEVED AND
PLAYED TO CALLING PARTY — 605

↓

CALLING PARTY MAY RECORD A MESSAGE FOR THE
CALLED PARTY IN RESPONSE TO GREETING — 606

**FIG. 7**

701 — SUBSCRIBER ELECTS TO ADMINISTER PERSONAL GREETINGS

702 — SYSTEM ANNOUNCES CURRENT STATUS OF GREETINGS, i.e., WHICH GREETINGS ARE ASSIGNED FOR EACH CALL TYPE

703 — SYSTEM PRESENTS VARIOUS OPTIONS TO SUBSCRIBER

704 — SUBSCRIBER ELECTS TO ACTIVATE GREETING(S)

705 — SUBSCRIBER IDENTIFIES A GREETING TO BE ACTIVATED

714 — PLAY ERROR ANNOUNCEMENT

NO

706 — IS SPECIFIED GREETING RECORDED

YES

707 — SUBSCRIBER INDICATES A CALL TYPE FOR WHICH THE SPECIFIED GREETING IS TO BE ACTIVE

708 — IS ACTIVATION TO BE IMMEDIATE

NO

709 — SUBSCRIBER INDICATES TIME AND DATE THAT ACTIVATION IS TO OCCUR

YES

710 — SYSTEM CONFIRMS CHOICE(S)

711 — IS THE SPECIFIED GREETING TO BE ACTIVATED FOR ANOTHER CALL TYPE

YES

NO

712 — ANY OTHER GREETINGS TO BE ACTIVATED

YES

NO

713 — EXIT

## FIC. 8

```
┌─────────────────────────────────┐  801
│      SUBSCRIBER ELECTS TO        │
│  ADMINISTER PERSONAL GREETINGS   │
└─────────────────────────────────┘
              │
              ▼
┌─────────────────────────────────┐  802
│   SYSTEM ANNOUNCES CURRENT STATUS│
│  OF GREETINGS, i.e., WHICH GREETINGS│
│    ARE ASSIGNED FOR EACH CALL TYPE │
└─────────────────────────────────┘
              │
              ▼
┌─────────────────────────────────┐  803
│  SYSTEM PRESENTS OPTIONS TO LISTEN TO,│
│  RECORD, DELETE OR ACTIVATE GREETINGS │
└─────────────────────────────────┘
              │
              ▼
┌─────────────────────────────────┐  804
│ SUBSCRIBER ELECTS TO RECORD GREETING(S) │
└─────────────────────────────────┘
              │
              ▼
┌─────────────────────────────────┐  805
│   SUBSCRIBER IDENTIFIES GREETING TO  │
│            BE RECORDED           │
└─────────────────────────────────┘
              │
              ▼
            806
         ╱IS      ╲           YES
        ╱ SPECIFIED GREETING╲──────────┐
        ╲ ALREADY RECORDED ╱           │
         ╲               ╱             ▼
              │NO              ┌──────────────────┐  807
              │                │ SUBSCRIBER GIVEN  │
              │                │  OPPORTUNITY TO   │
              │                │ LISTEN TO, DELETE │
              │                │  OR RE-RECORD     │
              │                │SPECIFIED GREETING │
              │                └──────────────────┘
              │                         │
              ▼◄────────────────────────┘
┌─────────────────────────────────┐  808
│  SUBSCRIBER SPEAKS GREETING, SYSTEM │
│   ENCODES AND STORES GREETING IN    │
│       DIGITAL STORAGE SYSTEM        │
└─────────────────────────────────┘
              │
              ▼
┌─────────────────────────────────┐  809
│  SUBSCRIBER GIVEN OPPORTUNITY TO    │
│   ACTIVATE THE NEW GREETING FOR     │
│      ONE OR MORE CALL TYPES         │
└─────────────────────────────────┘
              │
              ▼
            810
   YES   ╱ ANY      ╲
 ┌──────╱ MORE GREETINGS TO BE╲
 │      ╲   RECORDED  ╱
 │       ╲          ╱
 │            │NO
 │            ▼
 │         ╭──────╮  811
 │         │ EXIT │
 │         ╰──────╯
```